# EUROPEAN PATENT APPLICATION

(11) **EP 2 602 106 A1**
(43) Date of publication of application: **12.06.2013**
(21) Application number: 11814862.6
(22) Date of filing: 26.07.2011
(51) Int. Cl.: B32B 15/01, A44C 21/00, A44C 3/00

(54) **MULTILAYERED METAL COMPOSITE ARTICLE**

(30) Priority: 04.08.2010 RU 2010132702
(71) Applicant: Federalnoe Gosudarstvennoe Unitarnoe Predpriyatie "Goznak" (FGUP "Goznak"), St.Petersburg 197046 (RU)
(72) Inventor: TRACHUK, Arkadiy Vladimirovich, St.Petersburg 199004 (RU); LITVINCHUK, Sergei Viktorovich, Moscow 117525 (RU); FEDOROVA, Elena Mikhailovna, Moscow, 115093 (RU); AKININ, Alexey Borisovich, Moscow 109462 (RU); KOLOSOV, Ivan Alexandrovich, St.Petersburg 194100 (RU); GONCHAROV, Alexey Mikhailovich, Moscow 109451 (RU)
(74) Representative: Tischner, Oliver
(86) International application number: PCT/RU2011/000561
(87) International publication number: WO 2012/018285

(57) **Abstract**

The invention relates to the manufacture of multilayered metal articles, which are made from different materials and counterfeit protected, for example, composite base or collector's coins, metal tokens, medals, in particular, to the manufacture of composite coins, tokens or medals consisting of several parts, generally of a disc and a ring made from different materials. The invention provides a multilayered metal composite article comprising a circular central part and a ring-shaped part around it, wherein the central and ring-shaped parts are made from different metals, the ring-shaped part being made of at least one valve metal selected from the group consisting of aluminium, titanium, tantalum, niobium, with an upper surface layer subjected to electrochemical processing.

## Description

### Field of the Invention

The invention relates to the manufacture of multilayered metal articles which are made from different materials and counterfeit protected, such as, for example, composite base or collector's coins, metal tokens, medals, in particular, to the manufacture of composite coins, tokens or medals consisting of several parts, generally of a disc and a ring made from different materials.

### Background Art

Manufacture of composite metal articles, coins, offers great opportunities for expanding the range of coins in the form, color, size, and type of materials and for enhancing counterfeit protection thereof.

A multilayered metal composite article, a coin with a gold insert, comprises a body made from a traditional alloy and having a recess with a shrunk-in golden insert and a flange made of the body material around the periphery above the insert to protect the insert from wear (RU 2092093 C1, 10.10.1997).

Another composite coin comprises a circular central part consisting of a first metal, and a ring-shaped part of another metal around it. The central part has a core consisting of nickel, and two outer cover layers consisting of titanium (EP 1384413 A1, 28.01.2004).

Currently, of particular interest are souvenir and commemorative bimetallic coins, the central part of which is made of a colored metal and the ring-shaped part is made of silver. Commemorative coins having a central part of titanium, niobium and tantalum, the color of which is changed by heat treatment, have been brought into wide circulation ("Zolotoy chervonets", 2008, No.5, p.18-21). Various heat treatment conditions for titanium allow for a wide range of colors, in particular, gold, blue, blue with a gold undertone (CA 1094358 A1, 27.01.1981).

A multilayered metal composite article, a coin, described in EP 1384413 A1, 28.01.2004, is the most relevant prior art. However, the prior art has limited opportunities to improve the design and expand the range of coins.

### Summary of the Invention

The object of the invention is to enhance consumer and performance characteristics, expand the range and improve the design of coins.

The inventive combination of features increases the wear resistance (i.e. improves the performance characteristics) of articles.

It should be noted that all the features of the invention provide precisely this effect, and additionally the resulting appearance aids in widening the range of products and making the articles more discernible.

The object is accomplished in a multilayered metal composite article comprising a circular central part and a ring-shaped part around it, the central and ring-shaped parts being made from different metals, wherein the ring-shaped part is made from at least one valve metal selected from the group consisting of: aluminium, titanium, tantalum, niobium, with an upper surface layer subjected to electrochemical processing.

The invention provides for the manufacture of an article having a central part made of a different metal than that from which the ring-shaped part is made, and having a different color than that of the ring-shaped part.

For example, in a composite coin manufactured according to the invention and comprising a circular central part and a ring-shaped part around it, the ring-shaped part is made of valve metals, such as aluminum, titanium, tantalum, niobium with colored surface. Variation in color of the surface is provided by electrochemical processing, while the central part is made of a different metal, the color of which is different from that of the ring-shaped part.

The central part of the coin can be made of silver, gold, cupronickel, yellow pewter, nickel silver. Color of the ring-shaped part made of valve metals, such as aluminum, titanium, tantalum, niobium, modified by electrochemical processing, may be blue, dark blue, various shades of purple, significantly differing from the color of the central part of the coin.

### Brief Description of the Drawings

The present invention will be illustrated by its exemplary embodiments.

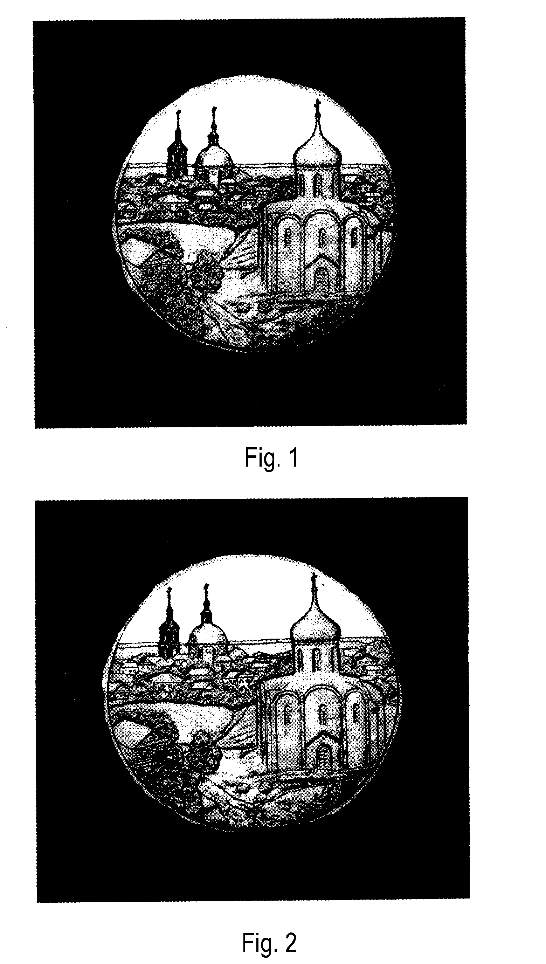

FIG. 1 and FIG. 2 show embodiments of a composite coin with different colors of the ring-shaped part.

### Best Embodiment of the Invention

A central part of a coin shown in Figure 1 was made of 925 silver, and a ring-shaped part was made of BT 1-0 titanium. The ring-shaped part was treated electrochemically to obtain intense purple color and joined with the central part.

A central part of a coin shown in Figure 2 was made of 925 silver, and a ring-shaped part was made of BT 1-0 titanium. The ring-shaped part was treated electrochemically at different voltage conditions than that in the previous example to obtain intense blue color and joined with the central part.

Manufacture of a composite coin having a ring-shaped part made of a colored valve metal such as aluminum, titanium, tantalum, niobium, and a central part made of different metal than that of the ring-shaped part and having a color, which is significantly different from that of the ring-shaped part, offers the opportunity for creating unique, expressive designs of souvenir and commemorative coins.

### Industrial Applicability

Optimization of electrochemical processing conditions makes it possible to obtain a variety of shades of a colored valve metal, such as aluminum, titanium, tantalum, niobium, which contributes to designing a wider range of souvenir products. Furthermore, manufacture of the ring-shaped part of valve metals improves the resistance of coins to wear.

## Claims

1. A multilayered metal composite article comprising a circular central part and a ring-shaped part around it, **characterized in that** the central and ring-shaped parts are made from different metals, the ring-shaped part being made of at least one valve metal selected from the group consisting of aluminium, titanium, tantalum, niobium, with an upper surface layer subjected to electrochemical processing.
